# EUROPÄISCHE PATENTSCHRIFT

(11) **EP 2 174 768 B1**
(45) Veröffentlichungstag und Bekanntmachung des Hinweises auf die Patenterteilung: **23.03.2016**
(21) Anmeldenummer: 09012751.5
(22) Anmeldetag: 08.10.2009
(51) Int. Cl.: B29C 45/76, B29C 45/84

(54) **Vorrichtung zur Erfassung der an einer Spritzgießmaschine auftretenden Kräfte**
Device for recording forces on an injection moulding machine
Dispositif de détermination des forces survenant sur une machine de moulage par injection

(30) Priorität: 10.10.2008 DE 102008050944
(43) Veröffentlichungstag der Anmeldung: 14.04.2010
(73) Patentinhaber: Keinath, Renate, 72336 Balingen (DE)
(72) Erfinder: Keinath, Renate, 72336 Balingen (DE)
(74) Vertreter: Reinhardt, Harry

(56) Entgegenhaltungen:
- EP-A1- 0 674 985
- EP-A1- 1 894 700
- DE-A1- 2 537 369
- DE-A1- 19 511 917
- US-A1- 2004 265 410

## Beschreibung

### Gebiet der Erfindung

Die Erfindung betrifft eine Vorrichtung zur Erfassung der an einer Formschließeinheit einer Spritzgießmaschine zur Verarbeitung von Kunststoffen und anderer plastifizierbarer Materialien wie keramischen oder pulverigen Materialien auftretenden Kräfte nach dem Oberbegriff des Anspruches 1.

### Stand der Technik

Aus der DE 195 11 917 A1 ist eine derartige Vorrichtung bekannt, bei der an einer Formschließeinheit ein Schließvorgang durch ein serielles Schließen erfolgt. Eine erste Einrichtung dient zur Bewegung des beweglichen Formträgers bis zum Formschluss und eine zweite Einrichtung zur Aufbringung der Schließkräfte. Die erste Einrichtung ist während des Formschlusses aus dem Kraftschluss ausgekoppelt, so dass dieser ein empfindlicher, hochauflösender Sensor zugeordnet werden kann. Ein weiterer Kraftsensor ist dann im Kraftschluss der zweiten Einrichtung an anderer Stelle angeordnet. Die Kraftsensoren befinden sich damit nicht am selben Einbauort, wenngleich auch dort mehrere Kraftübertragungselemente verwendet werden, in die die Sensoren eingebaut werden können. Dasselbe gilt für die in der EP 0 674 985 A1 gezeigte Vorrichtung.

Aus der DE 25 37 369 A1 ist ein Dehnungsaufnehmer für die Kraftmessung an Säulen oder Zugankern von Maschinen bekannt, der stirnseitig in entsprechende Zugholme eingesetzt werden kann. Bedarfsweise kann durch mehrere in Serie geschaltete Dehnungsmessstreifen auch eine Temperaturkompensation erfolgen.

In der EP 1 438 174 B1 wird am Abstützelement ein zentraler Sensor z.B. in Form eines Dehnmessstreifens zur Erfassung der Schließ- und Zuhaltekräfte der Schließeinheit vorgesehen. Mit ein und demselben Sensor werden dort sowohl die Kräfte erfasst, die beim Zufahren der Spritzgießform auftreten und als Werkzeugsicherungskraft überwacht werden, als auch die Schließkräfte, die regelmäßig um ein Mehrfaches und meist wenigstens um den Faktor 10 größer als die Werkzeugsicherungskraft sind.

Bei einer Formschlusseinheit, insbesondere wenn sie mit einem Kniehebelmechanismus betrieben wird, gibt es grundsätzlich zwei Betriebszustände, nämlich die eigentliche Bewegung der Formhälften der Spritzgießform zueinander sowie das Aufbringen/Halten der Schließkraft. Bei einer Maschine mit zum Beispiel 1.000 kN Presskraft, liegt die Schließkraft durch Variation der Strecklage des Kniehebels notmalerweise im Bereich 1:10 und muss etwa mit einer Messauflösung von 1:100 gemessen werden. Beim Schließen oder Öffnen der Spritzgießform, also bei der Bewegung des beweglichen Formträgers wirken reibungsbezogen oder durch die zu beschleunigenden Massen meistens lediglich Kräfte in der Größenordnung von 1:20 bis 1:100 der Schließkraft. Um also diese mit ein und demselben Kraftsensor messen zu können, muss dieser dann eine um den Faktor 10 höhere Messbereichsauflösung haben.

Hinzu kommt, dass in der Kunststoffverarbeitung allgemein das Problem besteht, das besonders bei Werkzeugen mit Vielfachkavitäten die Entformung der Teile nicht in jedem Zyklus garantiert werden kann und somit unter Umständen die Formhälften der Spritzgießform von der Spritzgießmaschine zugefahren werden, obwohl sich noch eventuell ein Kunststoffteil irgendwo zwischen den Formhälften befindet. Wird dieses Teil eingeklemmt und unter hoher Schließkraft verpresst, kann die Form beschädigt werden. Dieses Problem versucht man durch Überwachung der sogenannten Werkzeugsicherungskraft, also der Kraft beim Zufahren der Spritzgießform zu erkennen und mit den entsprechenden Folgemaßnahmen zu beheben. Da jedoch die Kavitäten in den Formhälften zum Teil sehr filigran sind - zum Beispiel sind die Kerne in Mikrosteckem mitunter 0,1 bis 0,2 mm dick und bis zu 3 mm lang -, bewegen sich die sicher zu erkennenden Werkzeugsicherungskräfte im Bereich von 0,1 kN und weniger. Dies führt bei einem Einzelsensor für den gesamten Kraftbereich zu einer Kraftmessung mit einer geforderten Messbereichsauflösung von besser 1:10.000. Bei größeren Maschinen im Bereich von 5.000 kN kann diese Messbereichsauflösung sogar noch höher ausfallen, da die Teile bei Vervielfachung der Kavitäten ja gleich bleiben können und die Bruchempfindlichkeit der Kerne ebenfalls. Damit ergeben sich Messbereichsauflösungen von 1:100.000. Dies ist mit den derzeit im Stand der Technik verfügbaren Sensoren im industriellen Serieneinsatz nicht wirtschaftlich zu realisieren.

Die bekannten Kraftmessverfahren an mechanischen Systemen beruhen nach dem Stand der Technik auf der Basis einer präzisen Längenmessung nach dem Hook'schen Gesetz F = k * x , wobei als präziser Längenmesser für die Erfassung von x je nach Federkonstante k und Messrate verschiedene Prinzipien wie Laufzeitmessung von Schall-, Torsions- oder Lichtwellen, magnetischelektrostatische Messprinzipien, der piezoelektrische Effekt oder Dehnungsmessstreifen verwendet werden. Die Methode mit Dehnungsmessstreifen ist besonders für quasistatische Messungen mit hoher Messrate an belasteten metallischen Bauteilen bei kleinem zur Verfügung stehenden Messraum geeignet.

Speziell dieses Messverfahren aber auch die anderen genannten haben die oben beschriebene Thematik, dass die geforderte Messauflösung nicht erreicht werden kann und dass die Messelemente je nach Auslegung bestimmte maximale Übertastfähigkeiten haben. Damit ist eine gängige Messmethode für die direkte Zuhaltekraftmessung an einer Spritzgießmaschine das Aufkleben/Anbringen eines Dehnungsmessstreifens am Kraftrahmen wie zum Beispiel den sogenannten Holmen. Man kann dies auch durch Einschrauben eines vorgefertigten Dehnungsmessstreifenelements in eine unter Kraft linear belastete Bohrung des Holms erreichen und hat so zugleich einen Schutz des Messelements erreicht. In diesem Fall wird bei Aufbringen der Schließkraft der Holm gestreckt, sodass sich die Anlagefläche des Sensors am Bohrungsende von der Einschraubstelle weg bewegt, sodass der Sensor nur solange messen kann, bis er spannungsfrei ist, also vom Bohrungsende abhebt. Dies erfordert zum einen, dass der Sensor beim Einschrauben auf die maximal zu messende Kraft vorgespannt werden muss, zum anderen jedoch, dass er sich im hohen Kraftbereich bei Überlast selbst schützt.

Lösungen mit Dehnmessstreifen sind zum Beispiel aus der EP 0 024 518 A1 oder der JP 09 254 218 A bekannt.

### Zusammenfassung der Erfindung

Ausgehend von diesem Stand der Technik liegt der vorliegenden Erfindung die Aufgabe zugrunde, eine einerseits einfach aufgebaute und andererseits präzise den Messbereich abdeckende Vorrichtung zur Erfassung der Kräfte an einer Formschließeinheit einer Spritzgießmaschine zu schaffen.

Diese Aufgabe wird durch eine Vorrichtung mit den Merkmalen des Anspruches 1 gelöst.

In der Vorrichtung werden zu diesem Zweck am Kraftübertragungselement wenigstens zwei identisch aufgebaute Sensoren vorgesehen, die auf den jeweiligen Messbereich abgestimmt einstellbar sind, sodass der eine Sensor dafür geeignet ist, die Werkzeugsicherungs- oder Zufahrkraft zu erfassen, während der andere Sensor für den Messbereich der Schließkraft geeignet ist. Damit liegt im kleinen Kraftbereich ein Sensor mit geforderter erhöhter Messbereichsauflösung vor, der mit höherer Empfindlichkeit und kleinerem Messbereich bei niedriger Vorspannung eingebaut wird. Das wesentliche der Erfindung beruht damit darauf, dass beide Sensoren identisch aufgebaut sind, und dennoch auf die unterschiedlichen Anforderungen ohne weiteres einstellbar sind, sodass beim Aufbau der Maschine der hierfür zu treibende Aufwand gering gehalten werden kann.

Die Sensoren sind in das Kraftübertragungselement integriert, wobei vorzugsweise ein Einbauort am Ende der Holme vorgesehen wird. An dieser Stelle kann dann in einer bevorzugten Ausführungsform eine Einschraubhülse eingeschraubt werden, über die das Messelement je nach Messbereich an einer Stelle eingeschraubt wird, an der eine höhere oder geringere mechanische Verstärkung vorliegt, sodass das Messelement entsprechend die höheren oder geringeren Kräfte mit geringerer oder höherer Bereichsauflösung messen kann.

In diesem Fall kann für beide Sensoren die Vorspanneinbauhülse wesentlich steifer gestaltet sein als das Messelement, sodass durch ein Variieren der Position entlang des Gewindes mit ein und demselben Messelement die verschiedenen mechanischen Verstärkungen und damit Empfindlichkeiten möglich werden. Je größer der Abstand zwischen Vorspanngewinde und Anlagefläche des eigentlichen Messelements, desto höher ist die Empfindlichkeit. Da im praktischen Einsatz die Messelemente typischerweise eine Länge von ca. 10 bis 20 mm haben, ist dies eine sehr einfache und preiswerte Methode, aus einem Grundmesselement zwei Sensoren mit zum Beispiel um den Faktor 10 unterschiedlicher Empfindlichkeit und damit auch Messbereich herzustellen.

Vorzugsweise ist bei derart mechanisch stark verstärkenden System eine aktive (elektronische) Temperaturkompensation in der Auswerteelektronik für ein quasi statisch messendes System integriert, wobei gleichzeitig ein Temperatursensor im Messelement integriert sein kann, wie dies zum Beispiel bei piezoresistiven Dehnungsmessstreifenelementen grundsätzlich vorhanden ist.

Weitere Vorteile ergeben sich aus den Unteransprüchen und der nachfolgenden Beschreibung.

### Kurzbeschreibung der Figuren

Im Folgenden wird die Erfindung anhand der beigefügten Figuren näher erläutert. Es zeigen:
- Fig. 1: eine dreidimensionale Ansicht einer Formschließeinheit von schräg oben,
- Fig. 2: einen Ausschnitt aus Fig. 1 im Bereich des stationären Formträgers,
- Fig. 3, 4: einen Schnitt in Längsrichtung des Kraftübertragungselements in Höhe des Sensors.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

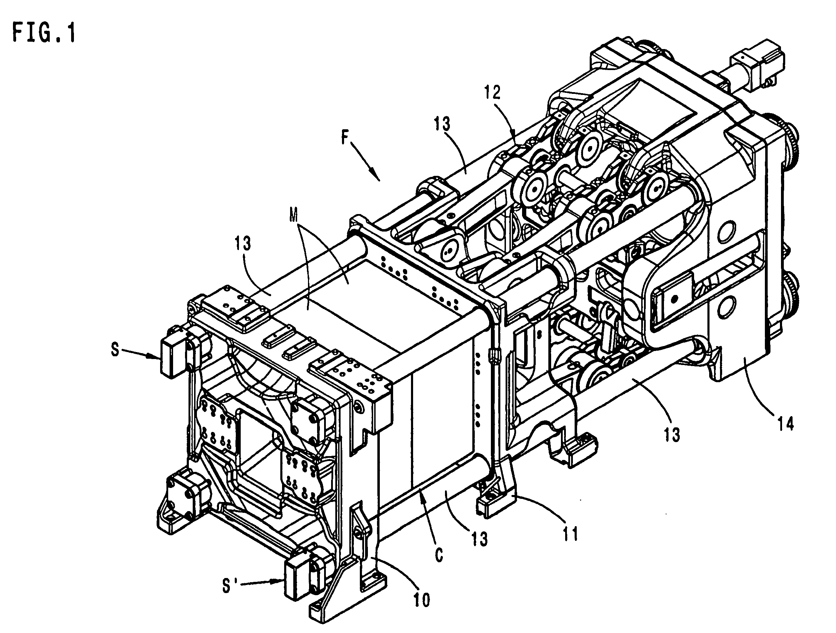

Figur 1 zeigt eine Formschließeinheit für eine Spritzgießmaschine zur Verarbeitung von Kunststoffen und anderer plastifizierbarer Materialien wie keramische oder pulverige Materialien. Die Formschließeinheit F ist üblicherweise auf einem Maschinenfuß angeordnet, wobei durch den mittigen Durchbruch im stationären Formträger 10 üblicherweise eine Spritzgießeinheit Zugang zu einer Angussöffnung einer im Formspannraum C der Formschließeinheit aufgenommenen Spritzgießform M hat Die Formhälften der Spritzgießform M sind an einem stationären Formträger 10 und einem beweglichen Formträger 11 lösbar befestigt, die zwischen sich den Formspannraum C ausbilden. Eine Schließeinrichtung 12, die im Ausführungsbeispiel durch einen Kniehebelmechanismus gebildet ist, der im Ausführungsbeispiel elektromechanisch angetrieben ist, ist zum zyklischen Öffnen, Zufahren und Schließen der Spritzgießform M vorgesehen und dient auch zur Aufbringung der Schließkraft. Alternativ sind andere hydraulische und/oder elektromechanische Schließeinrichtungen ebenfalls möglich, sofern bei diesen eine entsprechende Krafterfassung wie im folgenden noch erläutert erwünscht ist. Auch ein Einsatzzweck an einer seriellen Schließeinheit ist denkbar, bei der die hohe Schließkraft durch einen zusätzlichen Antrieb aufgebracht wird.

Bei der Bewegung des beweglichen Formträger 11 auf den stationären Formträger 10 zu ist einerseits die Werkzeugssicherungskraft, wie eingangs in der Beschreibungseinleitung erläutert, zu erfassen, um insbesondere zu vermeiden, dass es zu einer Beschädigung der Spritzgießform M durch noch in der Form befindliche, nicht vollständig entformte Spritzteile kommt. Andererseits ist beim Formschluss, also dann, wenn die Formhälften aneinander liegen, die Schließkraft entsprechend zu erfassen.

Die Schließeinrichtung 12 ist im Ausführungsbeispiel an einem Abstützelement 14 abgestützt, sodass bei ihrer Betätigung der bewegliche Formträger 11 auf den stationären Formträger 10 zu und von ihm weg bewegt werden kann. Mehrere Kraftübertragungselemente 13, die im Ausführungsbeispiel durch Holme gebildet sind und statt derer zum Beispiel auch um den Formspannraum C herum geführte Bügel vorgesehen sein können, verbinden den stationären Formträger 10 über den Formspannraum C hinweg, d.h. in axialer Richtung die Schließeinrichtung 12 mit einer der folgenden Komponenten zur Abstützung der Schließeinheit und damit zur Abstützung des beweglichen Formträgers 11 bei seiner eigentlichen Bewegung. Diese Komponenten umfassen vorzugsweise die Schließeinheit 12, das Abstützelement 14 für die Schließeinheit 12 oder den stationären Formträger 10. Das heißt mit jedem dieser Elemente können die Kraftübertragungselemente 13 bedarfsweise verbunden sein. So ist es insbesondere beim Aufbau einer Kunststoffspitzgießmaschine des Zwei-Platten-Typs möglich, dass sich die Schließeinheit 12 unmittelbar am Kraftübertragungselement 13 abstützt.

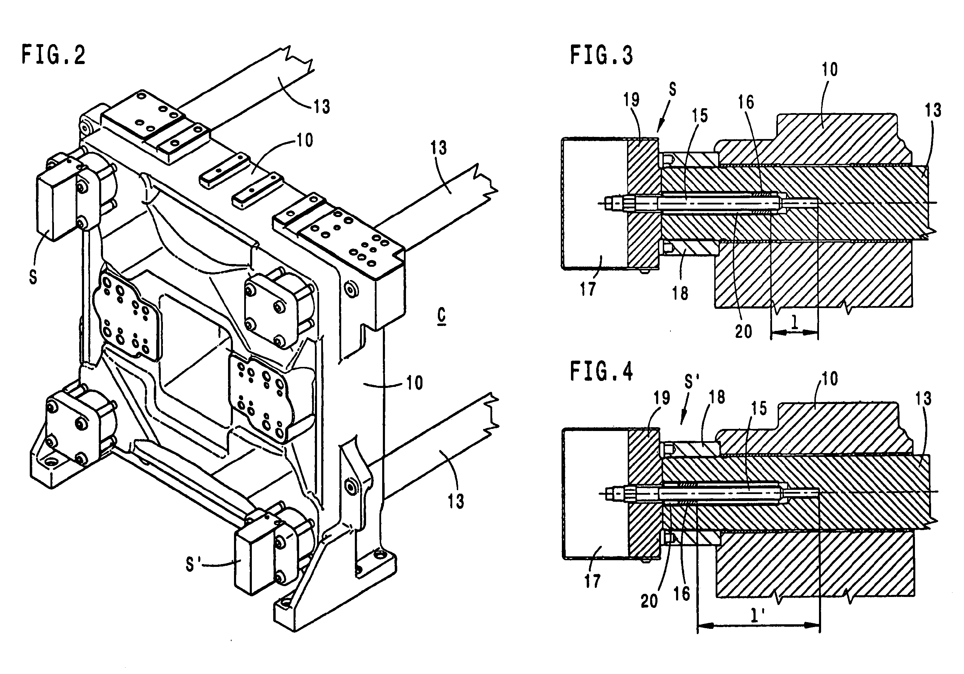

Zur Erfassung der Werkzeugsicherungskraft beim Zufahren der Spritzgießform als auch der wenigstens um den Faktor 10 größeren Schließkraft beim Schließen der Spritzgießform M ist eine Sensorik mit zugeordnetem Sensor S, S' vorgesehen, wobei erfindungsgemäß wenigstens zwei identisch aufgebaute Sensoren vorgesehen sind. Von diesen Sensoren ist je einer an jeweils einem anderen Kraftübertragungselement 13 vorgesehen. Gemäß Fig.1 und 2 sind die Sensoren S, S' oben links und unten rechts den als Holmen ausgebildeten Kraftübertragungselementen 13 zugeordnet. Die Sensoren sind dabei auf verschiedene mechanische Verstärkungen so einstellbar, dass ein Sensor S für den Messbereich der Zufahrkraft und der andere Sensor S' für den Messbereich der Schließkraft geeignet ist.

Wenigstens einer der Sensoren, nämlich vorzugsweise der Sensor S für die maximale Werkzeugsicherungs- oder Zufahrkraft wird auf die maximale von ihm zu messende Kraft vorgespannt eingebaut, was zur Folge hat, dass er bei Überschreiten dieser Kraft von der Anlagefläche abhebt, was gleichzeitig einen Schutz des Sensors darstellt. Dies liegt daran, dass gemäß der Ausführungsform in den Figuren 3 und 4 die Sensoren auf Zug belastet werden.

Vorzugsweise sind die Sensoren S, S' in die Kraftübertragungselemente 13 integriert. Dabei sind sie nicht nur identisch aufgebaut, sondern liegen jeweils am selben Einbauort im Kraftübertragungselement 13, wobei dieser Einbauort gemäß den Figuren in den Bohrungen 20 am Ende der Kraftübertragungselemente 13, also am Ende der Holme vorgesehen ist. Die Figuren 3 und 4 zeigen den Aufbau dergestalt, dass das auf Zug belastete Kraftübertragungselement 13 in Form der Holme den stationären Formträger 10 durchgreift und rückseitig über auf Druck belastete Hülsen 18, die dort durch Befestigungsmittel befestigt sind, und die Platte 19 gelagert ist. Auf der Platte 19 ist gemäß den Figuren 2 und 3 das Sensorgehäuse angeordnet, das die Signalaufbereitung 17 enthalten kann. Die Kraftübertragungselemente 13 sind Holme, die den stationären Formträger 10 mit dem Abstützelement 14 verbinden. Gleichzeitig dienen sie vorzugsweise dem beweglichen Formträger 11 als Führung, wobei der bewegliche Formträger auch an anderer Stelle zusätzlich oder alleine an anderer Stelle geführt sein kann.

Der Sensor S, S' weist gemäß Fig. 3 und 4 eine Hülse 15 zum Einbringen in das Kraftübertragungselement 13 und ein Messelement 16 auf. Die Hülse 15 besitzt verschiedene Stellungen zur Festlegung des Messelementes 16, die zu verschiedenen mechanischen Verstärkungen führen. Die Hülse 15 ist vorzugsweise eine Einschraubhülse, an deren Gewinde das Messelement 15 in Richtung der Einbringung des Sensors S, S' in das Kraftübertragungselement längsverschieblich ist. Damit kann durch ein Variieren der Position des Einschraubgewindes relativ einfach mit ein und dem selben Messelement 15 eine unterschiedlich starke mechanische Verstärkung und damit Empfindlichkeit erreicht werden. Je größer der Abstand zwischen Vorspanngewinde und Anlagefläche des eigentlichen Messelements ist, desto höher ist die Empfindlichkeit. Damit ist der Sensor S in Fig. 3 auf Grund des kleineren Abstands I unempfindlicher als der Sensor S' mit dem demgegenüber größeren Abstand I' in Fig. 4.

Vorzugsweise ist in diesem Fall dann für beide Sensoren die Vorspanneinbauhülse (Hülse 15) wesentlich steifer ausgestaltet als das Messelement 15, sodass durch ein Variieren der Position entlang des Gewindes mit ein und demselben Messelement die verschiedenen mechanischen Verstärkungen und damit Empfindlichkeiten möglich werden. Je größer der Abstand zwischen Vorspanngewinde und Anlagefläche des eigentlichen Messelements, desto höher ist die Empfindlichkeit. Da im praktischen Einsatz die Messelemente typischerweise eine Länge von ca. 10 bis 20 mm haben, ist dies eine sehr einfache und preiswerte Methode, aus einem Grundmesselement zwei Sensoren mit zum Beispiel um den Faktor 10 unterschiedlicher Empfindlichkeit und damit auch Messbereich herzustellen.

Der Sensor kann die im Stand der Technik üblichen Messverfahren aufweisen wie zum Beispiel auch magnetisch elektrostatisch, piezoelektrisch oder nach dem Dehnmessverfahren arbeiten. Gegebenenfalls ist auch eine elektronische Vorauswertung möglich, sodass die Steuerung keine zwei Sensoren verarbeiten muss, sondern über ein Schaltsignal erfährt, welcher Sensor gerade im Eingriff ist. So ist denkbar, dass nach einer vorausgegangenen Messung während der Werkzeugsicherungsphase das System selbst erkennt, dass der bisher messende Sensor jetzt kein Signal mehr liefert und dann auf den weiteren Sensor umschaltet.

Bei derartigen mechanisch stark verstärkten Systemen ist eine aktive elektronische Temperaturkompensation grundsätzlich erforderlich, wobei ein Temperatursensor bereits im Messelement, insbesondere zum Beispiel bei piezoresistiven Dehnungsmessstreifenelementen integriert sein kann. Die Temperaturkompensation kann dann aufgrund der im Sensor erfolgten Temperaturmessung über eine integrierte oder externe Auswerteelektronik erfolgen. Vorzugsweise ist das System mit einer Echtzeit-Bus-fähigen Signalschnittstelle versehen.

### Bezugszeichenliste

- 10: stationärer Formträger
- 11: beweglicher Formträger
- 12: Schließeinheit
- 13: Kraftübertragungselement
- 14: Abstützelement
- 15: Hülse
- 16: Messelement
- 17: Signalaufbereitung
- 18: Hülse
- 19: Platte
- 20: Bohrung

- C: Formspannraum
- F: Formschließeinheit
- I, I': Abstand
- M: Spritzgießform
- S, S': Sensor

## Patentansprüche

1. Vorrichtung zur Erfassung der an einer Formschließeinheit (F) einer Spritzgießmaschine zur Verarbeitung von Kunststoffen und anderer plastifizierbarer Massen wie keramischen oder plastischen Materialien auftretenden Kräfte, wobei die Formschließeinheit aufweist:
- einen stationären Formträger (10),
- einen beweglichen Formträger (11), der mit dem stationären Formträger (10) einen Formspannraum (C) zur Aufnahme einer Spritzgießform (M) ausbildet,
- eine Schließeinrichtung (12) zum zyklischen Öffnen, Zufahren und Schließen der Spritzgießform (M) und zur Aufbringung der Schließkraft,
- wenigstens zwei Kraftübertragungselemente (13), die den stationären Formträger (10) über den Formspannraum (C) hinweg zur Abstützung der Schließeinrichtung mit einer der folgenden Komponenten verbinden, wobei die Komponenten die Schließeinheit (12), ein Abstützelement (14) für die Schließeinheit (12) oder den stationären Formträger (10) umfassen,
wobei die Vorrichtung eine Sensorik zur Erfassung der Werkzeugsicherungskraft beim Zufahren der Spritzgießform (M) als auch der um ein Mehrfaches größeren Schließkraft beim Schließen der Spritzgießform mit wenigstens zwei zugeordneten Sensoren (S, S') aufweist, von denen je einer je einem der wenigstens zwei Kraftübertragungselemente (13) zugeordnet ist, wobei ein Sensor (S') für den Messbereich der Werkzeugsicherungskraft und der andere Sensor (S) für den Messbereich der Schließkraft geeignet ist,
**dadurch gekennzeichnet, dass** die wenigstens zwei identisch aufgebauten Sensoren für den Messbereich der Werkzeugsicherungskraft einerseits und für den Messbereich der Schließkraft andererseits auf verschiedene mechanische Verstärkung einstellbar sind, und dass die Sensoren (S, S') jeweils am selben Einbauort in den baugleichen Kraftübertragungselementen (13) eingebaut sind.

2. Vorrichtung nach Anspruch 1, **dadurch gekennzeichnet, dass** wenigstens einer der Sensoren (S, S'), vorzugsweise der Sensor für die maximale Werkzeugsicherungskraft, auf die maximale von ihm zu messende Kraft vorgespannt eingebaut ist.

3. Vorrichtung nach Anspruch 1 oder 2, **dadurch gekennzeichnet, dass** die Sensoren (S, S') in die Kraftübertragungselemente (13) integriert sind.

4. Vorrichtung nach einem der vorhergehenden Ansprüche, **dadurch gekennzeichnet, dass** die Kraftübertragungselemente (13) den stationären Formträger (10) mit einem Abstützelement (14) verbindende Holme sind, die vorzugsweise dem beweglichen Formträger (11) als Führung dienen.

5. Vorrichtung nach Anspruch 4, **dadurch gekennzeichnet, dass** die Sensoren (S, S') in Bohrungen (20) am Ende der Holme eingelassen sind.

6. Vorrichtung nach einem der vorhergehenden Ansprüche, **dadurch gekennzeichnet, dass** der Sensor (S, S') eine Hülse (15) zum Einbringen in das Kraftübertragungselement (13) und ein Messelement (16) aufweist, wobei die Hülse (15) verschiedene Stellungen zur Festlegung des Messelements (16) an der Hülse zur Einstellung verschiedener mechanischer Verstärkungen aufweist.

7. Vorrichtung nach Anspruch 6, **dadurch gekennzeichnet, dass** die Hülse eine Einschraubhülse ist, an deren Gewinde das Messelement (16) vorzugsweise entlang der Richtung des Einbringens des Sensors (S, S') ins Kraftübertragungselement längsverschieblich ist.

8. Vorrichtung nach einem der vorhergehenden Ansprüche, **dadurch gekennzeichnet, dass** im Sensor (S, S') eine Temperaturmessung integriert ist.

9. Vorrichtung nach Anspruch 8, **dadurch gekennzeichnet, dass** die Vorrichtung eine integrierte oder externe Signalaufbereitung (17) mit aktiver Temperaturkompensation aufgrund der Temperaturmessung des Sensors aufweist.

10. Vorrichtung nach einem der vorhergehenden Ansprüche, **dadurch gekennzeichnet, dass** sie eine Echtzeit-Bus-fähigen Signalschnittstelle aufweist.

## Claims

1. Device for detecting forces occuring on a mold closing unit (F) of an injection molding machine for processing plastics and other plasitifiable masses as ceramical and plastic materials, the mold closing unit comprising:
- a stationary mold carrier (10),
- a movable mold carrier (11) forming together with the stationary mold carrier (10) a mold clamping space (C) for receiving an injection mold (M),
- a closing device (12) for cyclically opening, moving and closing of the injection mold (M) and for generating the closing force,
- at least two force transmitting elements (13) connecting the stationary mold carrier (10) across the mold clamping space (C) with one of the following components for supporting the mold closing device, wherein the components include the closing device (12), a supporting element (14) for the closing device (12) or the stationary mold carrier (10),
wherein the device comprises a sensor system for detecting both a mold safeguarding force when moving the injection mold (M) and a several times larger closing force when closing the mold with at least two associated sensors (S, S'), one of which is associated to each one of the at least two transmitting elements (13), wherein one sensor (S') is adapted for the measuring range of the mold safeguarding force and the other sensor (S) is adapted for the measuring range of the closing force,
**characterized in that** the at least two identically constructed sensors for the measuring range of the mold safeguarding force, on the one hand, and for the measuring range of the closing force, on the other hand, are adjustable on different mechanical amplifications and that the sensors (S, S') are installed at the respectively same installation place in the structurally identical force transmitting elements (13).

2. Device according to claim 1, **characterized in that** at least one of the sensors (S, S') preferably the sensor for the maximum mold safeguarding force is installed preloaded on the maximum force to be measured by the sensor.

3. Device according to claim 1 or 2, **characterized in that** the sensors (S, S') are integrated in the force transmitting elements (13).

4. Device according to one of the preceding claims, **characterized in that** the force transmitting elements (13) are bars connecting the stationary mold carrier (10) with the supporting element (14), which bars preferably serve as guidance for the movable mold carrier (11).

5. Device according to claim 4, **characterized in that** the sensors (S, S') are embedded in bores (20) at the end of the bars.

6. Device according to one of the preceding claims, **characterized in that** the sensor (S, S') comprises a sleeve (15) for placement within the force transmitting element (13) and a measuring element (16), wherein the sleeve (15) comprises different positions for fixing the measuring element (16) on the sleeve for setting different mechanical amplifications.

7. Device according to claim 6, **characterized in that** the sleeve is a screw-in-sleeve comprising a thread, the measuring element (16) being longitudinally displaceable along this thread preferably along the direction of introducing the sensor (S, S') into the force transmitting element.

8. Device according to one of the preceding claims, **characterized in that** a temperature measurement is integrated into the sensor (S, S').

9. Device according to claim 8, **characterized in that** the device comprises an integrated or external signal processing (17) with active temperature compensation based on the temperature measurement of the sensor.

10. Device according to one of the preceding claims, **characterized in that** it comprises a real time bus capable signal interface.

## Revendications

1. Dispositif de détermination des forces survenant dans une unité de fermeture de moule (F) d'une machine à moulage par injection pour la fabrication de matériaux plastiques et d'autres masses plastifiables comme les matériaux céramiques ou plastiques, dans laquelle l'unité de moulage par injection comprend :
- un support de moule stationnaire (10),
- un support de moule déplaçable (11), qui forme avec le support de moule stationnaire (10) un espace de battement pour moule (C) pour la réception d'un moule de moulage par injection (M),
- un dispositif de fermeture (12) pour l'ouverture cyclique, l'alimentation et la fermeture du moule de moulage par injection (M) et pour l'application de la force de fermeture,
- au moins deux éléments de transmission de force (13), qui relient le support de moule stationnaire (10) par l'intermédiaire de l'espace de battement pour moule (C) jusqu'à l'étai du dispositif de fermeture avec un des composants suivants, dans lequel les composants comprennent l'unité de fermeture (12), un élément d'étayage (14) pour l'unité de fermeture (12) ou le support de moule stationnaire (10),
dans lequel le dispositif comporte un système de capteurs pour la détermination de la force de sécurisation d'outil lors de l'alimentation du moule pour moulage à injection (M) ainsi que de la force de fermeture plusieurs fois supérieure lors de la fermeture du moule pour moulage par injection avec au moins deux capteur associés (S,S'), dont chacun est associé à l'un des deux ou plus éléments de transmission de force (13), un capteur (S') étant approprié pour le domaine de mesure de la force de sécurisation d'outil et l'autre (S) pour le domaine de mesure de la force de fermeture,
**caractérisé en ce que** les deux ou plus capteurs conçus identiques, d'une part pour le domaine de mesure de la force de sécurisation d'outil et d'autre part pour le domaine de mesure de la force de fermeture, sont réglables sur un renforcement mécanique variable, et **en ce que** les capteurs (S, S') sont chacun montés au même endroit dans les éléments de transmission de force (13) conçus identiques.

2. Dispositif selon la revendication 1, **caractérisé en ce qu'**au moins l'un des capteurs (S, S'), de préférence le capteur pour la force de sécurisation d'outil maximale, est monté pré-contrait à la force maximale qu'il peut mesurer.

3. Dispositif selon la revendication 1 ou 2, **caractérisé en ce que** les capteurs (S, S') sont intégrés dans les éléments de transmission de force (13).

4. Dispositif selon l'une quelconque des revendications précédentes, **caractérisé en ce que** les éléments de transmission de force (13) sont des chapeaux reliant le support de moule stationnaire (10) à l'élément d'étayage (14) qui servent de préférence de guidage pour le support de moule déplaçable (11).

5. Dispositif selon la revendication 4, **caractérisé en ce que** les capteurs (S, S') sont logés dans des perçages (20) à l'extrémité des chapeaux.

6. Dispositif selon l'une des revendications précédentes, **caractérisé en ce que** le capteur (S, S') comporte une douille (15) destinée à être introduite dans l'élément de transmission de force (13) et un élément de mesure (16), dans lequel la douille (15) présente différentes positions pour la fixation de l'élément de mesure (16) sur la douille pour le réglage de différents renforcements mécaniques.

7. Dispositif selon la revendication 6, **caractérisé en ce que** la douille est une cheville, sur le taraudage de laquelle l'élément de mesure (16) est déplaçable en longueur, de préférence dans le sens de l'introduction du capteur (S, S') dans l'élément de transmission de force.

8. Dispositif selon l'une des revendications précédentes, **caractérisé en ce qu'**une mesure de la température est intégrée dans le capteur (S, S').

9. Dispositif selon la revendication 8, caractérisé ce que le dispositif comporte un traitement de signal (17) intégré ou externe avec une compensation de température active sur la base de la mesure de température du capteur.

10. Dispositif selon l'une des revendications précédentes, **caractérisé en ce qu'**il comprend une interface à bus en temps réel.
